# EUROPÄISCHE PATENTSCHRIFT

(11) **EP 0 828 104 B1**
(45) Veröffentlichungstag und Bekanntmachung des Hinweises auf die Patenterteilung: **05.09.2001**
(21) Anmeldenummer: 97111898.9
(22) Anmeldetag: 12.07.1997
(51) Int. Cl.: F16L 27/08

(54) **Drehbare Schlauchkupplung**
Rotatable hose coupling
Raccord rotatif pour tubes flexibles

(30) Priorität: 18.07.1996 DE 19628917
(43) Veröffentlichungstag der Anmeldung: 11.03.1998
(73) Patentinhaber: FRANZ SCHEFFER oHG, D-58706 Menden (DE)
(72) Erfinder: Neugart, Horst, 42389 Wuppertal (DE); Hess, Sebastian Filip, 58730 Fröndenberg (DE)
(74) Vertreter: COHAUSZ HANNIG DAWIDOWICZ & PARTNER

(56) Entgegenhaltungen:
- EP-A- 0 423 644
- EP-A- 0 728 978
- AU-A- 746 766
- DE-C- 810 452
- DE-C- 851 289
- DE-C- 3 309 936
- DE-U- 7 626 988
- DE-U- 9 311 759

## Beschreibung

Die Erfindung betrifft eine Schlauchkupplung zur verdrehbaren Verbindung eines Schlauches mit einem Anschlussschraubteil, insbesondere eines Schlauches mit einer Handbrause, bestehend aus einem Nippel mit zylindrischem, sägezahnähnlich profiliertem Ansatz und gestuftem Kopf mit Stützring und in einer Nut gelagerter O-Ringdichtung, einer den Schlauch umgebenden Hülse mit umgebördeltem und das Schlauchende umfassenden Rand und einer die Hülse sowie den von der der Hülsen- bzw. Schlaucheinführung gegenüberliegenden Seite einführbaren Nippel aufnehmenden Anschlussmutter mit Gewinde und deren Innenraum gegen das Anschlussschraubteil abdichtenden Flachdichtung.

Bekannt sind Schlauchkupplungen, insbesondere zur Verbindung des Schlauches mit einer Handbrause, bei denen der Nippel mehr oder weniger drehbar in der Anschlussmutter gelagert ist. Zur Abdichtung des Nippels gegen den Anschlussstutzen oder den sonstigen Anschluss ist eine Ringdichtung vorgesehen, die in einer in der Innenwandung der Anschlussmutter vorgesehenen Nut gelagert ist. Abgesehen von Problemen beim Aufschrauben bestehen Probleme, diesen Dichtring immer genau so anzuordnen und dessen Position zu wahren, dass eine bleibende Abdichtung gewährleistet ist.

Daher schlägt die DE-PS 33 09 936 vor, eine Flachdichtung so anzuordnen, dass diese die Funktion der weiter oben beschriebenen Ringdichtung übernehmen kann. Dazu ist ein drehbarer Lagerring vorgesehen, der sich seinerseits wiederum an einem Vorsprung der Anschlussmutter abstützt und eine entsprechende Auflagefläche bildet, auf die die Flachdichtung aufgelegt werden kann. Damit übernimmt dieser drehbare Lagerring die Funktion eines axialen Widerlagers für die Flachdichtung. Nachteilig dabei ist, dass ein zusätzliches Bauteil benötigt wird, um die vorteilhafte Flachdichtung wirksam zu positionieren und abstützen zu können. Die beschriebenen Nachteile werden nach der DE-PS 33 09 936 zum Teil dadurch aufgefangen, dass der eigentliche Kopf des Nippels über ein Kugellager abgestützt wird.

Aus der DE-GM 93 11 759 ist eine Schlauchkupplung bekannt, bei der der Kopf des Nippels eine Art Schnappverschluss bildet, der dementsprechend in eine Art Nut in der Anschlussmutter eingehakt wird. Die beschriebene Flachdichtung stützt sich dann auf einem Ringvorsprung im Gehäuse der Anschlussmutter ab, die oberhalb des eingehakten Kopfes des Nippels angeordnet ist. Abgesehen davon, dass die Herstellung eines derartigen Nippels sehr aufwendig ist, entstehen bei der Montage und insbesondere bei der Demontage eines derartigen Nippels erhebliche Probleme, zumal ein derartiger Nippel nur von unten her in die Anschlussmutter eingeführt werden kann. Aufgrund des beschriebenen Rastverschlusses muss der Nippel mit einem relativ schmalen Ringbereich das ganze Gewicht des anhängenden Schlauches tragen. Es ist nicht zu vermeiden, dass insbesondere bei entsprechender Überlastung eine Beschädigung eintritt, die dann in aller Regel nur dadurch behoben werden kann, dass die gesamte Schlauchkupplung ausgewechselt wird.

Aus der DE-GM 76 26 988 ist eine drehbare Kupplung zwischen Druckluftschlauch und einem entsprechenden stationären Gerät bekannt. Auch hier sind 0-Ringdichtungen und zwar zwei vorgesehen, um den Bereich zwischen Anschlussmutter und Nippel wirksam abzudichten. Der Nippel stützt sich dabei sowohl mit seinem oberen wie auch mit seinem unteren Teil in der Anschlussmutter ab, um die notwendigen Kräfte übertragen zu können. Es fehlt allerdings hier völlig an der Flachdichtung, so dass die notwendige Abdichtung dieses Bereiches nicht gewährleistet ist.

Schließlich ist es aus der DE-GM 92 18 552 bekannt geworden, eine Schlauchkupplung so auszubilden, dass der Nippel sich mit seinem oberen Kopfrand an dem drehbar angeordneten Lagerring abstützt, wobei dieser Lagerring gleichzeitig auch als Widerlager für die Flachdichtung dient. Nachteilig ist somit auch hier, dass ein gesondertes Bauteil erforderlich wird, um eine verdrehsichere Schlauchkupplung zu schaffen. Dieser Lagerring unterliegt nicht nur erheblichen Beanspruchungen, sondern er kann bei entsprechender Montagetätigkeit auch sogar letztlich noch aus der Anschlussmutter herausrutschen, so dass es sich ebenso wie bei der Flachdichtung um ein nicht verliergesichertes Bauteil handelt.

Der Erfindung liegt daher die Aufgabe zugrunde, eine im Aufbau und in der Funktion einfach und sicher wirkende Schlauchkupplung zu schaffen.

Die Aufgabe wird gemäß der Erfindung dadurch gelöst, dass der Stützring vom im Abstand zur O-Ringdichtung ausgebildeten Unterteil des gestuften Kopfes des Nippels gebildet ist und sich direkt auf einen, den Aufnahmeraum für Schlauch und Hülse vom das Gewinde aufweisenden Kopplungsraum trennenden Ringvorsprung der Anschlussmutter abstützt, wobei der Innendurchmesser der Anschlussmutter in Weiterführung zum Kopplungsraum nach bestimmter Strecke größer wird und die Flachdichtung aufnimmt, und dass der Nippel und die Anschlussmutter aus einem bezüglich der Eigenschaften korrespondierenden Material hergestellt sind.

Gemäß der Erfindung ist somit eine Schlauchkupplung vorgegeben, die vom Prinzip her nur ganz wenige Bauteile aufweist, nämlich den Nippel und die Anschlussmutter sowie die Flachdichtung, die als solche wie weiter hinten noch erläutert auch noch so untergebracht werden kann, dass sie nicht verloren geht, selbst wenn die Verbindung zwischen Schlauch und Anschlussschraubteil nicht vorhanden ist, insbesondere auch während des Transportes. Damit steht für die Montage und Demontage immer ein komplettes Bauteil zur Verfügung, das sich dadurch weiter auszeichnet, dass sich die Ringdichtung, die vom Prinzip her bekannt ist, außerhalb des Abstützbereiches liegt und damit entlastet ist. Eine vorteilhafte Wirksamkeit des als O-Ringdichtung wirkenden 0-Ringes ist damit gewährleistet, da die Abstützung mit der Anschlussmutter erst im Bereich unterhalb des 0-Ringes gegeben ist. Weiter ist damit auch die Flachdichtung als solche vorteilhaft so anzuordnen, dass sie sich direkt am Gehäuse der Anschlussmutter abstützt, ohne Zwischenschaltung eines weiteren Bauteils, insbesondere eines solchen aus anderem Werkstoff. Aufgrund dieser speziellen Ausbildung der gesamten Schlauchkupplung ist es möglich, mit verhältnismäßig einfachen Mitteln eine verdrehsichere Schlauchkupplung vorzugeben, die in ihrer Funktion voll wirksam ist, dafür aber aus wenigen und damit auch preiswerter herzustellenden Bauteilen besteht. Sowohl der 0-Ring, wie auch die Flachdichtung dichten vorteilhaft sicher ab und sind selbst verhältnismäßig wenig beansprucht, so dass hohe Standzeiten erreichbar werden.

Nach einer zweckmäßigen Weiterbildung der Erfindung ist vorgesehen, dass die Anschlussmutter und der Nippel aus einem bezüglich der Eigenschaften korrespondierenden Material hergestellt sind. Während beim Stand der Technik ein aus Metall oder ähnlichem Material bestehender Lagerring eingesetzt worden ist, um die Beweglichkeit des Nippels in der Anschlussmutter zu gewährleisten, ermöglicht die Erfindung dies durch die Formgebung, ohne dass es zusätzlicher Hilfsmittel bedarf. Da der Kopf des Nippels von seiner Form und seinen Abmessungen her und auch die zugehörige Anschlussmutter praktisch jede beliebige Veränderung und Anpassung zulässt, kann auch unterschiedlichen Gegebenheiten Genüge getan werden. So ist es beispielsweise denkbar, dass der Kopf insgesamt eine abgerundete Form erhält, so dass nicht nur die Unterseite des Stützringes trägt, sondern quasi der gesamte Kopf. Andererseits ist auch die Möglichkeit gegeben, den Kopf genau umgekehrt auszubilden, so dass gezielt nur der Stützring bzw. seine Unterseite die Abstützfunktion übernehmen muss. Damit kann auch Problemen Rechnung getragen werden, wie beispielsweise Verkalkung, indem eben gezielt der Kopf und auch die Anschlussmutter eine Form erhalten, die dieser Verkalkung entgegenwirken oder auch nur von der Fertigungsseite her praktisch ausgebildet sind, wenn beispielsweise eine Verkalkung gar nicht zu befürchten ist.

Um die Beweglichkeit des Nippels in der Anschlussmutter zu erhöhen, ist es gemäß der Erfindung weiter vorgesehen, dass der Nippel aus einem reibungsarmen Material besteht oder eine entsprechende Beschichtung aufweist. Denkbar ist es, den Nippel mit Teflon zu beschichten oder aber aus entsprechendem Material herzustellen, wobei natürlich auch die Anschlussmutter aus einem entsprechenden Material bestehen oder damit beschichtet sein kann, um so die Flächen, die aufeinander reiben, vor Verschleiß oder sonstiger Überbeanspruchung zu bewahren. Weiter ist es möglich, Silikon zu verwenden, also ein Material, was eigentlich im Gegensatz dazu eine Art Schmierfilm bildet, auf dem der Nippel dann sich in der Anschlussmutter drehen und bewegen kann. Dabei sollten Materialien verwendet werden, die auch über lange Standzeiten die notwendige Schmierfilmeigenschaft bewahren.

Aufgrund der Anordnung des 0-Ringes im Bewegungsbereich des Nippels kann ohne die Dichtwirkung zu beeinflussen eine bewegungsfreundliche Ausbildung dadurch geschaffen werden, dass die O-Ringdichtung eine reibungsarme Beschichtung aufweist oder entsprechend ausgebildet ist. Bekannt sind aus Teflon-Material bestehende Dichtringe, wobei diese allerdings keinen runden Querschnitt aufweisen, sondern allenfalls abgerundete Kanten. Auch ist der Verformungsbereich gering, so dass nur bei entsprechender Gegenausbildung der Anschlussmutter die notwendige Abdichtung bei solchem Material gewährleistet werden kann.

Um den Sitz des Kopfes in der Anschlussmutter zu begünstigen und um quasi ein Rückrutschen immer wieder in die achsparallele Position zu begünstigen, kann es von Vorteil sein, wenn das Unterteil des Kopfes und die Oberseite des Ringvorsprunges korrespondierend schräg verlaufend ausgebildet sind. Beim Einsetzen des Kopfes in die Anschlussmutter rutscht dieser gleich in die achsparallele Position und muss wenn schon bewusst aus dieser herausbewegt werden.

Eine weitere sehr zweckmäßige Ausbildung ist aber die, bei der das Unterteil des Kopfes und der Ringvorsprung auf den einander zugewandten Seiten ballig ausgebildet sind. Diese ballige Ausbildung führt dazu, dass beim Hin- und Herbewegen des Nippels in der Anschlussmutter immer nur eine ringförmige schmale Fläche reibend aufeinander sich bewegt, so dass eine vorteilhafte Leichtgängigkeit erreicht ist. Zwar wird nach einer längeren Standzeit unter Umständen die Balligkeit etwas nachlassen, doch bleibt es bei der vorteilhaften ringförmigen Auflagefläche, die sich allenfalls etwas verbreitern kann.

Entgegen der üblichen Ausführungen des Ansatzes bei bekannten Nippeln ist gemäß der Erfindung vorgesehen, dass das Profil auf dem Ansatz des Nippels über seine Länge gesehen verändert, insbesondere mit enger gesetzten Zahnvorsprüngen ausgerüstet ist. Dadurch soll das Aufschieben einerseits und das Fixieren andererseits begünstigt werden, wobei insbesondere bei den ersten Zahnvorsprüngen die Spitze der Zähne abgeflacht sind.

Von Vorteil ist es dabei, wenn das Profil auf dem Ansatz zunächst axiale Flanken und dann schräge, d. h. von der Spitze gesehen schräg nach außen laufende Schrägflächen aufweist. Hierbei versteht sich, dass insbesondere die nach außen schräg laufenden Schrägflächen in eine spitze bzw. eine scharfe vorstehende Ringfläche enden, um quasi ein "Einschneiden" in die Innenwand des Schlauches zu bewirken. Dabei kommt es in aller Regel nicht zu einer Verletzung des Schlauches, sondern nur dazu, dass über die Länge des Aufsteckendes des Schlauches eine mehr oder weniger stark wellige Form erzeugt wird.

Weiter vorn ist bereits erläutert worden, dass im Bereich des Kopplungsraumes der Anschlussmutter eine Flachdichtung angeordnet ist, um Undichtigkeiten im Bereich der Gewindeverbindung zu vermeiden. Insbesondere bei höheren Drücken kann dies nicht immer sichergestellt werden, selbst wenn eine derartige Flachdichtung eingesetzt wird. Daher sieht die Erfindung vor, dass die Abstützfläche für die Flachdichtung im Kopplungsraum bis unter das Gewinde reichend bzw. durch das Gewinde hindurchgezogen ausgebildet ist. Damit ist es völlig ausgeschlossen, dass auch bei höheren Drücken Feuchtigkeit oder auch Druckluft sich durch das Gewinde hindurch nach außen verflüchtigt. Vorteilhaft ist darüber hinaus, dass so eine Verliersicherung geschaffen ist, da die Flachdichtung auch beim Transport gesichert ist, da sie ja bis unter das Gewinde geschoben ist.

Ebenfalls eine Art Verliersicherung, hier nur für die Hülse, ist die, bei der der Rand der Hülse bis an den Ansatz heranreichend ausgebildet ist. Die Hülse als solche hält sich somit auf dem Ansatz, was vorteilhafterweise dazu führt, dass ein entsprechend vorbereitetes Bauteil zur Verfügung gestellt wird, in der einerseits die Flachdichtung bereits ihre Position einnimmt, andererseits auf der der Hülsen- bzw. Schlaucheinführung gegenüberliegenden Seite auch die Hülse, wobei die Hülse dafür sorgt, dass der in die Anschlussmutter eingeführte Nippel nicht verloren werden kann. Darüber hinaus hat ein entsprechend weit vorgezogener Rand der Hülse den Vorteil, dass der gesamte Schlauch im Bereich der Anschlussmutter so umhüllt ist, dass er beim Hin- und Herbewegen, insbesondere beim Drehen des Schlauches und insbesondere auch umgekehrt, d. h. also der Brause im Schlauch möglich wird, ohne dass durch das Gummimaterial ein negativer Reibungseffekt erzeugt wird, weil nämlich dieser gesamte Bereich von der in der Regel aus Blech bestehenden Hülse ummantelt ist.

Die beschriebene, verdrehsichere Schlauchkupplung soll gemäß Aufgabenstellung eigentlich nur ein Verdrehen beispielsweise des Duschkopfes bzw. der Handbrause ermöglichen, ohne dass sich der Schlauch mitdreht. Ein Verkanten ist in aller Regel nicht notwendig. Dabei sieht die Erfindung vor, dieses Verkanten oder Schrägstellen des Schlauches gegenüber der Brause dadurch wirksam zu unterbinden, dass die Wandung des Aufnahmeraumes der Anschlussmutter bis zur Spitze des eingesetzten Nippels mit Ansatz heruntergezogen ausgebildet ist.

Dabei kann es allenfalls zweckmäßig sein, die Spitze des Nippels etwas länger auszubilden, um das Einführen des Schlauches bei der Montage zu erleichtern.

Die Erfindung zeichnet sich dadurch aus, dass eine Schlauchkupplung geschaffen ist, die in der Herstellung und in der Funktion einfach und sicher ist. Dabei ist sowohl die Montage erleichtert, als vor allem auch der Transport, weil durch die geschickte Ausbildung der Schlauchkupplung die eigentliche Schlauchkupplung vormontiert transportiert werden kann, insbesondere auch dann, wenn die Flachdichtung entsprechend bis unter das Gewinde gezogen angeordnet ist. Sie stellt für sich selber eine Verliersicherung dar, aber gleichzeitig auch für den eingesetzten Nippel mit der aufgesetzten Hülse, wobei die Hülse als solche auch wiederum eine Verliersicherung für den Nippel darstellt. Der Kopf des Nippels übernimmt wie bekannt die Abstützung des Schlauches, ermöglicht es aber, die Fläche, auf der beim Verdrehen der Handbrause die gesamte Belastung liegt, kleinzuhalten. Dadurch sind die Reibungskräfte gering und lange Standzeiten zu erwarten. Andererseits aber ist diese Stützfläche auch wiederum so stark und widerstandsfähig ausgebildet, dass ein Abbrechen oder ein sonstiges Beschädigen nicht zu erwarten ist. Gerade bei einer Handbrause werden nämlich auf die beschriebenen Teile nicht unerhebliche Kräfte einwirken, insbesondere auch deshalb, weil die Handbrause als solche auch in der Ruhelage aufgehängt wird und dann mit dem Gewicht des angehängten Schlauches belastet ist. Als weiterer wesentlicher Vorteil ist zu nennen, dass die eigentliche Anschlussmutter nur noch aus einem einzigen Bauteil besteht, das aufgrund seiner Formgebung günstig und preiswert hergestellt werden kann. Dennoch sind auch für ungünstige Einsatzfälle Lösungen vorgesehen, die beispielsweise das Festsetzen durch Kalk oder ähnliche Schmutzteile nahezu ausschließen.

Weitere Einzelheiten und Vorteile des Erfindungsgegenstandes ergeben sich aus der nachfolgenden Beschreibung der zugehörigen Zeichnung, in der ein bevorzugtes Ausführungsbeispiel mit den dazu notwendigen Einzelheiten und Einzelteilen dargestellt ist. Es zeigen:
- Fig. 1: eine Schlauchkupplung im Schnitt,
- Fig. 2: die Anschlussmutter im Schnitt, mit eingesetzter Flachdichtung,
- Fig. 3: den Nippel in Längsschnitt,
- Fig. 4: die Hülse im Längsschnitt,
- Fig. 5: eine vergrößerte Darstellung des Stützbereiches zwischen Nippelkopf und Anschlussmutter und
- Fig. 6: eine besondere Formgebung für den Kopf des Nippels.

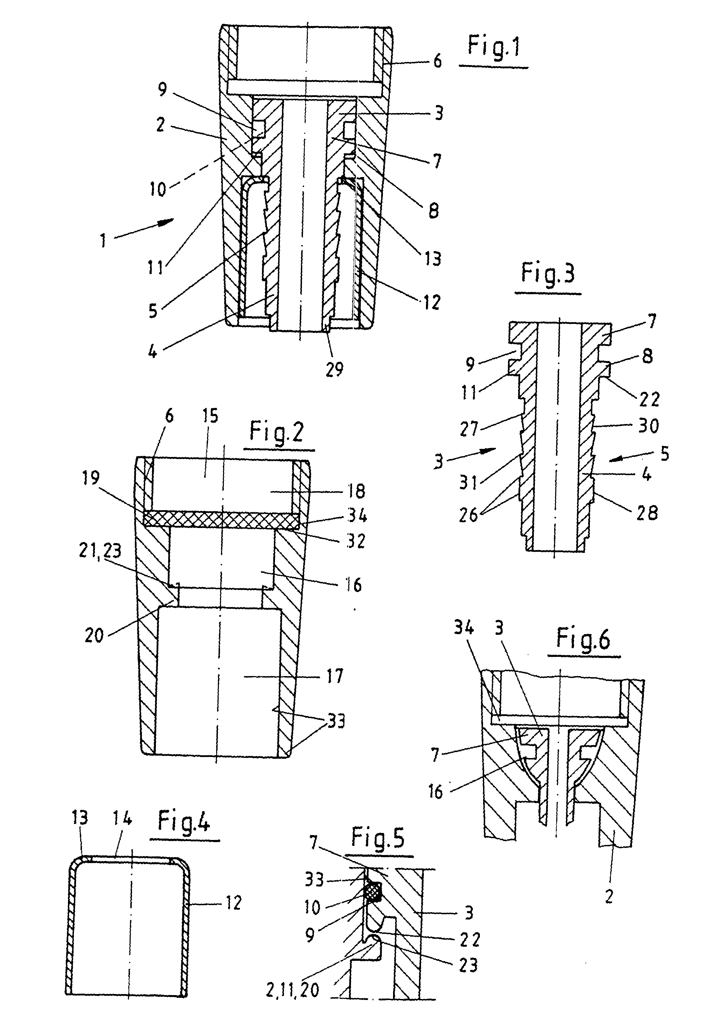

Fig. 1 zeigt eine Schlauchkupplung 1, bei der die Anschlussmutter 2 einteilig ausgebildet ist. Dies bedeutet, dass die Anschlussmutter 2 als komplettes Bauteil den entsprechend eingesetzten Nippel 3 aufnimmt und abstützt, ohne dass es weiterer, zusätzlicher Bauteile bedarf.

Erkennbar ist in Fig. 1, dass der Nippel 3 wie üblich mit einem Ansatz 4 ausgerüstet ist, der ein Profil 5 aufweist, dass das Aufschieben des hier nicht dargestellten Schlauches begünstigt. Auf der der Hülsen- bzw. Schlaucheinführung gegenüberliegenden Seite verfügt die Anschlussmutter 2 über ein Gewinde 6, dass das Aufschrauben des hier ebenfalls nicht dargestellten Bauteils, insbesondere der Handbrause ermöglicht.

Der Nippel 3 besteht aus dem Kopf 7 mit dem Stützring 8, der seinerseits sich an der Anschlussmutter 2 abstützt, sowie aus dem schon erwähnten Ansatz 4 mit dem Profil 5. Im Kopf 7 ist eine Nut 9 ausgebildet, in die eine hier nur angedeutete O-Ringdichtung 10 eingesetzt werden kann. Diese O-Ringdichtung 10 sorgt dafür, dass aus dem Kopplungsraum 18 Flüssigkeit oder auch Gas nicht seitlich vorbei austreten kann.

Der Stützring 8 bildet das Unterteil 11 des Kopfes 7, das sich auf den Ringvorsprung 20 abstützt, der am bzw. in der Anschlussmutter 2 ausgebildet ist. Dadurch ist die Möglichkeit gegeben, einen auf dem Profil 5 des Ansatzes 4 aufsitzenden Schlauch so anzuordnen, dass die hier nicht dargestellte, aber über das Gewinde 6 mit der Schlauchkupplung 1 verbundene Handbrause zu verdrehen.

Dieses Verdrehen der nicht dargestellten Handbrause wird noch dadurch begünstigt, dass das in der Anschlussmutter 2 bzw. deren Aufnahmeraum 17 sitzende Schlauchende von einer Hülse 12 umgeben ist. Diese Hülse 12 verfügt über einen umgebördelten Rand 13, wobei Fig. 1 und Fig. 4 zu entnehmen ist, dass dieser Rand 13 bis an den Ansatz 4 des Nippels 3 herangeführt ist. Es verbleibt also ein Durchlass 14, der aber nach dem Aufschieben der Hülse 12 auf den Ansatz 4 sicherstellt, dass die Hülse 12 vom Ansatz 4 herabrutscht, damit ist eine Selbstsicherung erreicht.

Der Innenraum 16 der Anschlussmutter 2 ist wie schon erwähnt in den Aufnahmeraum 17 für die Hülse 12 und das nicht dargestellte Schlauchendstück, sowie in den Kopplungsraum 18 unterteilt. Im Kopplungsraum 18 ist die Flachdichtung 19 angeordnet, was Fig. 2 verdeutlicht. Fig. 2 zeigt außerdem, dass der Ringvorsprung 20 auf der Oberseite 21 eine Schräge aufweisen kann, um praktisch ein Hereinrutschen des Nippels 3 oder besser des Kopfes 7 beim Einschieben in die Anschlussmutter 2 zu begünstigen. Diese besonders ausgebildete Oberseite 21 verhindert dabei auch ein Kippen oder Schrägstellen des Schlauches gegenüber der Handbrause und behindert in aller Regel ein unabhängiges Verdrehen nicht. Dabei ist es von Vorteil, wenn die einander zugewandten Seiten 22/23 von Stützring 8 und Ringvorsprung 20 korrespondierend ausgebildet sind.

Der Nippel 3 wird von der Seite 15 her in die Anschlussmutter 2 eingeführt. Dann wird die Flachdichtung 19 aufgelegt und von unten her die Hülse 12 mit oder ohne den eingeschobenen Schlauch eingeführt. Dann ist bereits die Montage beendet. Dabei zeigt Fig. 3, dass die Länge des Ansatzes 4 unterschiedlich ausgebildete Zahnvorsprünge 26, 27 vorgesehen sein können. Dabei sind gemäß Fig. 3 die ersten Zahnvorsprünge 26 mit axialen Flanken 28 ausgerüstet, während Richtung Stützring 8 die Flanken 28 immer steiler werden und zwar von der Spitze 29 des Ansatzes 4 her gesehen. Damit ergeben sich Schrägflächen 30, die zwar das Aufschieben des Schlauchendes ähnlich begünstigen, wie die flachen Zahnvorsprünge 26, die aber ein Zurückziehen deutlich aufgrund der ringförmigen Schneiden 31 erschweren oder gar verhindern.

Fig. 4 ist weiter vorne schon erläutert worden. Hier ist eine Hülse 12 wiedergegeben, die einen weit umgebördelten Rand 13 aufweist. Eine derartige Hülse 12 kann aus Blech oder einem ähnlichen Material bestehen, dass das Drehen der Anschlussmutter 2 gegenüber dem Nippel 3 problemlos ermöglicht.

Fig. 5 zeigt ein Detail im Bereich der Berührungsflächen zwischen Stützring 8 und Ringvorsprung 20. Erkennbar ist, dass hier die beiden Teile von Nippel 3 und Anschlussmutter 2 auf den zugewandten Seiten 22/23 eine ballige Form erhalten, um so die Berührungsfläche beim Drehen der Anschlussmutter 2 gegenüber dem Nippel 3 auf ein geringstmögliches Maß zu reduzieren. Erkennbar ist hier auch die O-Ringdichtung 10, die sich in der Nut 9 befindet und die an der Wandung 33 reibt, um hier die notwendige Abdichtung zu bewirken. Hier erreicht man die beste Abdichtung mit einem 0-Ring und seinem kreisrunden Querschnitt, weil er sich entsprechend verformen und an die Wandung 33 anlegen kann. Im Bereich der Flachdichtung 19, die sich auf die Abstützfläche 32 abstützt, will man dagegen eine flächige Dichtung erreichen, wobei diese Flachdichtung 19 hier gezielt diese Form aufweist, um sie bis unter das Gewinde 6 schieben zu können. Die Anschlussmutter 2 verfügt deshalb über eine entsprechend weite Ausnehmung 34. Entsprechendes zeigt sowohl Fig. 2, wie auch Fig. 6.

Fig. 6 zeigt ergänzend, dass es auch die Möglichkeit gibt, den Kopf 7 des Nippels 3 insgesamt so zu formen, dass er sich in den entsprechend ausgebildeten Innenraum 16 einpasst. Auch hier wirkt die Flachdichtung 19 als Verliersicherung, wobei natürlich durch die entsprechende Form des Kopfes 7 und auch des Innenraumes 16 eine verhältnismäßig große Berührungsfläche zwischen den beiden Bauteilen Kopf 7 und Anschlussmutter 2 geschaffen ist. Dies kann durch eine entsprechende, hier nicht wiedergegebene Beschichtung aufgefangen werden und auch dadurch, dass entsprechende Materialien zum Einsatz kommen, aus denen der Nippel 3 besteht. Die in Fig. 6 wiedergegebene Ausbildung zeichnet sich dadurch aus, dass sie auch höchsten Beanspruchungen Stand hält, beispielsweise im industriellen Bereich.

## Patentansprüche

1. Schlauchkupplung zur verdrehbaren Verbindung eines Schlauches mit einem Anschlussschraubteil, insbesondere eines Schlauches mit einer Handbrause, bestehend aus einem Nippel (3) mit zylindrischem, sägezahnähnlich profiliertem Ansatz (4) und gestuftem Kopf (7) mit Stützring (8) und in einer Nut (9) gelagerter O-Ringdichtung (10), einer den Schlauch umgebenden Hülse (12) mit umgebördeltem und das Schlauchende umfassenden Rand (13) und einer die Hülse (12) sowie den von der der Hülsen- bzw. Schlaucheinführung gegenüberliegenden Seite (15) einführbaren Nippel (3) aufnehmenden Anschlussmutter (2) mit Gewinde (6) und deren Innenraum (16) gegen das Anschlussschraubteil abdichtenden Flachdichtung (19),
**dadurch gekennzeichnet,**
dass der Stützring (8) vom im Abstand zur O-Ringdichtung (10) ausgebildeten Unterteil (11) des gestuften Kopfes (7) des Nippels (3) gebildet ist und sich direkt auf einen, den Aufnahmeraum (17) für Schlauch und Hülse (12) vom das Gewinde (6) aufweisenden Kopplungsraum (18) trennenden Ringvorsprung (20) der Anschlussmutter (2) abstützt, wobei der Innendurchmesser der Anschlussmutter in Weiterführung zum Kopplungsraum (18) nach bestimmter Strecke größer wird und die Flachdichtung (19) aufnimmt und dass der Nippel (3) und die Anschlussmutter (2) aus einem bezüglich der Eigenschaften korrespondierenden Material hergestellt sind

2. Schlauchkupplung nach Anspruch 1,
**dadurch gekennzeichnet,**
dass der Nippel (3) aus einem reibungsarmen Material besteht oder einer entsprechende Beschichtung aufweist.

3. Schlauchkupplung nach Anspruch 1,
**dadurch gekennzeichnet,**
dass die O-Ringdichtung (10) eine reibungsarme Beschichtung aufweist oder entsprechend ausgebildet ist.

4. Schlauchkupplung nach Anspruch 1 - Anspruch 3,
**dadurch gekennzeichnet,**
dass das Unterteil (11) des Kopfes (7) und die Oberseite (21) des Ringvorsprunges (20) korrespondierend schräg verlaufend ausgebildet sind.

5. Schlauchkupplung nach Anspruch 1 - Anspruch 3,
**dadurch gekennzeichnet,**
dass das Unterteil (11) des Kopfes (7) und der Ringvorsprung (20) auf den einander zugewandten Seiten (22/23) ballig ausgebildet sind.

6. Schlauchkupplung nach Anspruch 1 - Anspruch 5,
**dadurch gekennzeichnet,**
dass das Profil (5) auf dem Ansatz (4) des Nippels (3) über seine Länge gesehen verändert, insbesondere mit enger gesetzten Zahnvorsprüngen (26, 27) ausgerüstet ist.

7. Schlauchkupplung nach Anspruch 1-Anspruch 5,
**dadurch gekennzeichnet,**
dass das Profil (5) auf dem Ansatz (4) zunächst axiale Flanken (28) und dann schräge, d. h. nach von der Spitze (29) gesehen schräg nach außen laufende Schrägflächen (30) aufweist.

8. Schlauchkupplung nach Anspruch 1 - Anspruch 7,
**dadurch gekennzeichnet,**
dass der Rand (13) der Hülse (12) bis an den Ansatz (4) heranreichend ausgebildet ist.

9. Schlauchkupplung nach Anspruch 1 - Anspruch 8,
**dadurch gekennzeichnet,**
dass die Abstützfläche (32) für die Flachdichtung (19) im Kopplungsraum (18) bis unter das Gewinde (6) reichend bzw. durch das Gewinde (6) hindurchgezogen ausgebildet ist.

10. Schlauchkupplung nach Anspruch 1 - Anspruch 9,
**dadurch gekennzeichnet,**
dass die Wandung (33) des Aufnahmeraumes (17) der Anschlussmutter (2) bis zur Spitze (29) des eingesetzten Nippels (3) mit Ansatz (4) heruntergezogen ausgebildet ist.

## Claims

1. A hose coupling for the rotatable connection of a hose to a screwed connecting member, more particularly a hose to a hand-held shower, comprising: a nipple (3) having a cylindrical, serrated profiled attachment (4) and a stepped head (7) with supporting ring (8) and O-ring seal (10) mounted in a groove (9); a sleeve (12) enclosing the hose and having a bent-over edge (13) engaging around the hose end; and a connecting nut (2) which receives the sleeve (12) and also the nipple (3) introduceable from the side (15) opposite the sleeve/hose introduction and has a screw-threading (6) and a flat seal (19) sealing its internal space off from the screwed connecting member,
**characterised in that**
the supporting ring (8) is formed by the lower portion (11), formed at a distance from the O-ring seal (10), of the stepped head (7) of the nipple (3) and bears directly against an annular projection (20) of the connecting nut (2) which separates the receiving space (17) for the hose and sleeve (12) from the coupling space (18) having the screw-threading (6) while the internal diameter of the connecting nut in its further extension to the coupling space (18) becomes larger after a predetermined distance and receives the flat seal (19), the nipple (3) and the connecting nut (2) being made from a material which corresponds as regards properties.

2. A hose coupling according to claim 1,
**characterised in that**
the nipple (3) is made from a low-friction material or has a corresponding coating.

3. A hose coupling according to claim 1,
**characterised in that**
the O-ring seal (10) has a low-friction coating or is correspondingly constructed.

4. A hose coupling according to claims 1 to 3,
**characterised in that**
the lower portion (11) of the head (7) and the top side (21) of the annular projection (20) are constructed correspondingly extending at an inclination.

5. A hose coupling according to claims 1 to 3,
**characterised in that**
the lower portion (11) of the head (7) and the annular projection (20) are constructed crowned on the sides facing one another (22/23).

6. A hose coupling according to claims 1 to 5,
**characterised in that**
viewed over its length, the profile (5) on the attachment (4) of the nipple (3) changes, being more particularly furnished with more closely set tooth projections (26,27).

7. A hose coupling according to claims 1 to 5,
**characterised in that**
the profile (5) on the attachment (4) first has axial flanks (28) and then has inclined surfaces (30) - i.e., surfaces extending outwards at an inclination, viewed from the tip (29).

8. A hose coupling according to claims 1 to 7,
**characterised in that**
the edge (13) of the sleeve (12) is constructed to extend as far as the attachment (4).

9. A hose coupling according to claims 1 to 8,
**characterised in that**
the bearing surface (32) for the flat seal (19) in the coupling space (18) is constructed to extend as far as below the screw-threading (6) or extends through the screw threading (6).

10. A hose coupling according to claims 1 to 9,
**characterised in that**
the wall (33) of the receiving space (17) of the connecting nut (2) is constructed to extend down as far as the tip (29) of the inserted nipple (3) with attachment (4).

## Revendications

1. Raccord pour tuyaux flexibles pour une liaison rotative d'un tuyau flexible à une pièce de raccordement à vis, en particulier d'un tuyau flexible avec une douchette à main, constitué d'un manchon fileté (3) avec une saillie (4) cylindrique profilée en forme de dents de scie et une tête (7) étagée avec une bague d'appui (8) et un joint d'étanchéité torique (10) logé dans une rainure (9), une douille (12), entourant le tuyau flexible, avec un bord (13), rabattu et entourant l'extrémité du tuyau flexible, ainsi qu'un écrou de raccordement (2), recevant le manchon fileté (3) pouvant être introduit par le côté (15) opposé à l'introduction de la douille ou respectivement du tuyau flexible, avec un taraudage (6) et un joint d'étanchéité plat (19) étanchéifiant son volume intérieur (16) par rapport à la pièce de raccordement à vis,
**caractérisé en ce que** la bague d'appui (8) est formée par la partie inférieure (11), conformée à écartement du joint d'étanchéité torique (10), de la tête (7) étagée du manchon fileté (3) et s'appuie directement sur une saillie annulaire (20) de l'écrou de raccordement (2) qui sépare la chambre de réception (17) pour le tuyau flexible et la douille (12) d'avec le volume de raccordement (18) présentant le taraudage (6), le diamètre intérieur de l'écrou de raccordement augmentant après une distance prédéterminée de continuation vers le volume de raccordement (18) et que le manchon fileté (3) et l'écrou de raccordement (2) sont fabriqués en des matériaux qui se correspondent par rapport aux qualités.

2. Raccord pour tuyaux flexibles selon la revendication 1,
**caractérisé en ce que** le manchon fileté (3) est constitué d'un matériau à faible frottement ou présente un revêtement correspondant.

3. Raccord pour tuyaux flexibles selon la revendication 1,
**caractérisé en ce que** le joint d'étanchéité torique (10) présente un revêtement à faible frottement ou est réalisé en correspondance.

4. Raccord pour tuyaux flexibles selon les revendication 1 - revendication 3,
**caractérisé en ce que** la partie inférieure (11) de la tête (7) et la face supérieure de la saillie annulaire (20) sont conformées à allure oblique en correspondance.

5. Raccord pour tuyaux flexibles selon les revendication 1 - revendication 3,
**caractérisé en ce que** la partie inférieure (11) de la tête (7) et la saillie annulaire (20) sont conformées bombées sur les faces (22/23) tournées l'une vers l'autre.

6. Raccord pour tuyaux flexibles selon les revendication 1 - revendication 5,
**caractérisé en ce que** le profil (5) sur la saillie (4) du manchon fileté (3) vu sur sa longueur, varie, en particulier est muni de saillies en forme de dents (26, 27) disposées plus serrées.

7. Raccord pour tuyaux flexibles selon les revendication 1 - revendication 5,
**caractérisé en ce que** le profil (5) sur la saillie (4) présente d'abord des flancs axiaux (28) et ensuite des surfaces inclinées (30) obliques, c'est-à-dire, vues depuis la pointe (29), s'étendant obliquement vers l'extérieur.

8. Raccord pour tuyaux flexibles selon les revendication 1 - revendication 7,
**caractérisé en ce que** le bord (13) de la douille (12) est conformé allant jusqu'à la saillie (4).

9. Raccord pour tuyaux flexibles selon les revendication 1 - revendication 8,
**caractérisé en ce que** la surface d'appui (32) pour le joint d'étanchéité plat (19) est conformée dans le volume de raccordement (18) allant jusqu'au-dessous du taraudage (6) ou respectivement étendue dans le taraudage (6).

10. Raccord pour tuyaux flexibles selon les revendication 1 - revendication 9,
**caractérisé en ce que** la paroi (33) du volume de réception (17) de l'écrou de raccordement (2) est conformée étendue jusqu'à la pointe (29) du manchon fileté (3) installé avec la saillie (4).
